## Europäisches Patentamt

## European Patent Office

## Office européen des brevets

(19)

(11) Numéro de publication : **0 058 583**
**B1**

# FASCICULE DE BREVET EUROPÉEN

(12)

(45) Date de publication du fascicule du brevet :
**02.01.86**

(21) Numéro de dépôt : **82400090.5**

(22) Date de dépôt : **18.01.82**

(51) Int. Cl.⁴ : **G 21 C 13/06**, G 21 C   1/02

(54) **Réacteur nucléaire refroidi par un métal liquide et présentant une dalle épaisse munie de logements.**

(30) Priorité : **20.01.81 FR 8100963**

(43) Date de publication de la demande :
**25.08.82 Bulletin 82/34**

(45) Mention de la délivrance du brevet :
**02.01.86 Bulletin 86/01**

(84) Etats contractants désignés :
**DE FR GB IT**

(56) Documents cités :
**FR-A- 1 325 733**
**FR-A- 1 429 810**
**FR-A- 1 501 741**
**FR-A- 2 196 506**
**GB-A- 1 449 842**
**US-A- 4 192 717**
**Nuclear Safety, volume 16, no. 5, 1975, Washington D.C.(US), J. GRAHAM: "Nuclear safety design of the clinch river breeder reactor plant", pages 564-580**
**Atoomenergie, volume 4, no.6, 1962, Zwolle (NL), W.W. NIJS: "De snelle reactor", pages 111-123**
**Nuclear Eng. International, volume 23, no. 272, 1978, Londres (GB), H. BANAL et al.:"Construction of the world's first full-scale fast breeder reactor", pages 43-60**

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur : **Costes, Didier**
**11-19, Avenue du Château**
**F-92190 Meudon (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

La présente invention se rapporte à un réacteur nucléaire refroidi par un métal liquide, du type comprenant une cuve remplie de métal liquide et obturée à sa partie supérieure par une dalle rigide servant au supportage des échangeurs de chaleur et des pompes du circuit primaire.

De façon plus précise, l'invention se rapporte à un réacteur nucléaire à neutrons rapides du type intégré, c'est-à-dire du type dans lequel l'ensemble du circuit primaire du réacteur est logé dans la cuve. Dans ce type de réacteur, le cœur du réacteur contenant les assemblages combustibles repose sur le fond de la cuve ou sur sa périphérie par l'intermédiaire d'un sommier d'alimentation en métal liquide (généralement du sodium) et d'un platelage. Le sodium liquide est chauffé dans le cœur par la réaction de fission du combustible nucléaire avant de pénétrer dans un collecteur chaud placé au-dessus du cœur. Il circule ensuite dans des échangeurs de chaleur dans lesquels il transmet une grande partie de sa chaleur au fluide (généralement du sodium) circulant dans des circuits secondaires. Le sodium primaire refroidi qui sort à la partie inférieure des échangeurs de chaleur dans un collecteur froid est aspiré par des pompes primaires qui le réinjectent dans le sommier. Dans ce type de réacteur, les échangeurs et les pompes primaires sont généralement suspendus à la dalle obturant la cuve du réacteur. Il en est de même d'un certain nombre d'autres organes nécessaires au fonctionnement ou à la sûreté du réacteur, parmi lesquels on peut notamment citer les échangeurs de refroidissement du réacteur à l'arrêt.

D'une manière connue, la dalle obturant la cuve est constituée d'une structure en tôle d'acier soudée formant un ensemble d'alvéoles remplis de béton pour constituer une protection neutronique et contribuer à la raideur de la dalle. La face inférieure de la dalle est munie d'un circuit de refroidissement et d'un revêtement calorifuge inférieur, baigné par le gaz neutre surmontant le métal liquide à 500 °C environ ; cette face peut ainsi être maintenue à une température ne dépassant pas 100 °C par exemple. L'épaisseur de dalle, déterminée pour obtenir une résistance suffisante et des déplacements suffisamment réduits lors des variations de température de la face inférieure, est de l'ordre de 2,50 m pour des grands réacteurs d'une puissance électrique de 1 000 à 1 500 MW. Les échangeurs et pompes primaires sont implantés dans un ensemble d'orifices ou puits verticaux traversant la dalle, de diamètre suffisant à leur introduction verticale ; ces composants comportent, dans leur partie correspondant à l'épaisseur de la dalle, des organes d'étanchéité et de protection thermique et neutronique assurant une continuité de fonctions avec la dalle. Les têtes de ces composants, spécifiques de leur fonctionnement (moteurs pour les pompes, connexions aux circuits secondaires, etc.) sont situées au-dessus de la dalle, ainsi que l'ensemble des circuits. Une dalle ainsi constituée peut être qualifiée de mince car on cherche effectivement à réduire les hauteurs consacrées aux fonctions de supportage et d'isolement neutronique, aussi bien sur la dalle elle-même pour faciliter le dessin général, que sur les composants dont la hauteur totale joue largement sur le prix et la facilité de manutention.

Une structure ainsi constituée, avec étagement d'une dalle mince et d'une zone supérieure pour les têtes des composants, présente divers inconvénients. Tout d'abord, l'ensemble des appareils et têtes de composants au-dessus de la dalle apparaît comme vulnérable à des chocs incidentels lors de manutentions d'objets lourds au-dessus de la dalle. D'autre part, les têtes d'échangeurs ainsi exposées en hauteur ne peuvent être protégées vis-à-vis d'éventuelles fuites de sodium secondaire, conduisant à incendie, que par l'adjonction d'une enveloppe de doublage qui est onéreuse et qui rend plus difficile l'inspection régulière de la paroi principale. D'autre part encore, la minceur de la dalle oblige, pour une résistance donnée, à utiliser plus d'acier que si l'on était libre de l'épaisseur ; de même cette minceur oblige, pour limiter les déplacements en hauteur liés aux dilatations de la plaque inférieure, à des astreintes sévères sur les températures de celle-ci. Enfin, les alvéoles internes de la dalle, entièrement garnis de béton, ne peuvent être inspectés.

Dans un réacteur nucléaire à neutrons rapides du type à boucles, il est connu de loger les collecteurs annulaires de plusieurs échangeurs situés dans une cuve unique entre deux dalles minces surplombant cette cuve (document FR-A-2 196 506). Par ailleurs, il est connu du document ATOOMENERGIE, volume 4, n° 6, pages 111-123, de ménager un évidement dans une dalle surplombant un échangeur pour loger la tête de celui-ci.

La présente invention a pour objet un réacteur nucléaire refroidi par un métal liquide permettant de remédier aux inconvénients qui viennent d'être mentionnés des réacteurs à dalle relativement mince conçus jusqu'à ce jour. Plus précisément, la présente invention a pour objet la réalisation d'un réacteur dans lequel la dalle obturant la cuve forme pratiquement un plancher plat supprimant tout risque de choc lors des manutentions au-dessus de la dalle tout en assurant un confinement individuel des têtes d'échangeurs autorisant une inspection directe de la paroi primaire.

A cet effet et conformément à la présente invention, il est proposé un réacteur nucléaire refroidi par un métal liquide, comprenant une cuve remplie de métal liquide et obturée à sa partie supérieure par une dalle présentant une ouverture centrale dans laquelle est logé au moins un bouchon tournant surplombant le cœur du réacteur, et des ouvertures périphériques disposées en couronne autour de l'ouverture centrale, par lesquelles sont suspendus au moins une pompe et un échangeur de chaleur, ce réacteur étant caractérisé en ce que la dalle est épaisse et comporte dans son épaisseur des voiles plans disposés radialement autour de l'ouverture centrale, au moins un premier logement délimité par les voiles plans surplombant l'une desdites ouvertures périphériques par laquelle est suspendu un échangeur de chaleur, de façon à enfermer la tête de cet échangeur, ce premier logement étant obturé par un couvercle au-dessus de la tête de l'échangeur.

On comprend qu'un réacteur réalisé selon ces caractéristiques est particulièrement sûr en raison du confinement individuel des têtes d'échangeurs vis-à-vis des fuites de sodium et des chocs dus aux manutentions effectuées au-dessus de la dalle. De plus, ces caractéristiques permettent de simplifier les têtes d'échangeurs en supprimant leur carénage en double paroi, ce qui autorise une inspection directe de la paroi primaire par exemple au moyen d'une caméra de télévision. En outre, l'augmentation de l'épaisseur de la dalle par rapport aux réacteurs de la technique antérieure, augmentation rendue nécessaire par la création des logements indiqués, permet, pour une masse donnée de métal, d'accroître la raideur et la résistance de la dalle, sous réserve bien entendu que les cloisons radiales subsistant entre les logements et s'étendant sur toute la hauteur de la dalle gardent la résistance nécessaire. Cette augmentation de l'épaisseur de la dalle, jusqu'à 6 m par exemple permet aussi de réaliser de façon beaucoup plus facile les remplissages de protection puisqu'elle rend les structures métalliques de la dalle plus facilement accessibles à l'homme. Enfin, ces caractéristiques autorisent la réalisation d'un plancher plat autour du bouchon tournant conduisant à une plus grande facilité d'exploitation.

Les logements recevant les têtes d'échangeurs peuvent se prolonger radialement pour assurer le passage des tuyauteries du circuit secondaire de refroidissement jusqu'à une paroi cylindrique périphérique à la dalle, que ces tuyauteries traversent par l'intermédiaire de garnissages externes étanches. Les têtes d'échangeurs et les tuyauteries étant ainsi enfermées dans ces logements, on peut renoncer à les doter d'une double paroi comme le nécessitait la technique antérieure.

Conformément à une autre caractéristique de l'invention, la dalle comporte dans son épaisseur au moins un deuxième logement délimité par les voiles plans et surplombant l'une desdites ouvertures périphériques par laquelle est suspendue une pompe, de façon à enfermer la tête de cette pompe, au moins une partie d'un arbre d'entraînement vertical reliant la pompe à un moteur, et un volant d'inertie porté par cet arbre, ce deuxième logement étant obturé par un couvercle au-dessus de la tête de pompe. Il est avantageux de placer le volant d'inertie dans le logement pour limiter les conséquences d'éventuelles ruptures. Selon le cas, le moteur entraînant l'arbre en rotation peut être soit enfermé dans le deuxième logement, soit placé à l'extérieur de ce logement, au-dessus du couvercle. Cette dernière solution présente l'avantage d'assurer le refroidissement du moteur et de ne pas accroître de façon excessive l'épaisseur de la dalle par suite de l'encombrement des moteurs.

Conformément à une autre caractéristique de l'invention, la dalle comporte dans son épaisseur un troisième logement pour la manutention des combustibles, ce troisième logement étant relié à l'intérieur de la cuve et à une installation de manutention des combustibles par deux dispositifs de transfert.

Selon encore une autre caractéristique de l'invention, on peut également recouvrir le bouchon tournant d'un couvercle amovible fixé à la dalle, ce couvercle pouvant notamment prendre la forme d'un dôme.

On décrira maintenant, à titre d'exemple non limitatif, un mode de réalisation particulier de l'invention en se référant aux figures suivantes :

la figure 1 est une vue en coupe de la dalle d'un réacteur nucléaire à neutrons rapides réalisée conformément à l'invention ; cette figure montre l'implantation d'une pompe primaire et d'un échangeur intermédiaire ;

la figure 2a est une vue schématique, en coupe, d'une dalle de réacteur selon l'invention, échancrée pour recevoir un dispositif de transfert d'éléments combustibles identiques à celui existant dans un réacteur dont la dalle est conforme à l'art antérieur ; et

la figure 2b est une vue schématique, en coupe, d'une dalle de réacteur selon l'invention, intégrant un dispositif de transfert modifié.

On suppose ici connu le dessin général d'un réacteur à neutrons rapides refroidi au sodium, de type intégré ; pour une description précise on pourra se reporter à la revue « Nuclear Engineering International » Vol. 23 n° 272, juin 1978.

On n'a donc pas représenté l'ensemble du réacteur au-dessous de la dalle, mais seulement ses attaches principales sur la dalle. On suppose que le réacteur est contenu dans une cuve chaude attachée sous la dalle ; la description s'étend sans difficulté à d'autres types de supportages. Conformément à la technique connue, l'ensemble du circuit primaire est donc confiné dans une cuve principale 10 à axe vertical, à paroi chaude se raccordant à la dalle 12 maintenue froide par une virole 10a à gradient thermique. Cette cuve 10 est munie extérieurement d'une couche calorifuge 14 et elle est entourée d'une cuve dite de sécurité 16 normalement froide, attachée également à la dalle 12. Une jupe cylindrique 18 en acier entoure la cuve de sécurité 16 et assure le supportage de la dalle 12 à partir du radier de l'installation, non représenté ; cette jupe 18 est refroidie par un dispositif non représenté et elle est entourée d'un cylindre de protection neutronique 20 en béton, remontant autour de la dalle 12.

La dalle 12 est percée d'un ensemble d'ouvertures ou puits verticaux servant à la fixation de grands composants : l'ouverture centrale 22, surplombant le cœur du réacteur (non représenté) sert à porter un grand bouchon tournant 24 portant lui-même le petit bouchon tournant 26, qui est traversé par le bouchon de contrôle commande 28 équipé des barres de contrôle non représentées, et par au moins un appareil 30 de manutention verticale du combustible. Par le jeu de rotations combinées des deux bouchons tournants 24 et 26, cet appareil 30 permet le transfert des éléments combustibles du réacteur entre un socle fixe non représenté situé à côté du cœur et tout emplacement voulu dans celui-ci. On voit sur la figure un des puits ou ouvertures périphériques 32 dans la dalle 12, fixant un échangeur intermédiaire 34 alimenté en sodium secondaire tiède par la tuyauterie 36 et fournissant à l'extérieur du sodium secondaire chaud par la tuyauterie 38. On voit également un des puits ou ouvertures périphériques 40 dans la dalle 12, fixant la pompe primaire 42 qui est entraînée par le moteur électrique 44, un volant d'inertie 46 étant fixé sur l'axe pour assurer une décroissance lente du pompage en cas de panne électrique.

La dalle est construite en tôles d'acier soudées, les espaces internes autres que les puits étant au moins partiellement garnis de matériaux absorbants neutroniques tels que du béton 48. La face inférieure 12a, protégée par un revêtement calorifuge 50, est refroidie par un circuit de refroidissement non représenté. Toutes les dispositions ci-dessus sont conformes à la technique antérieure.

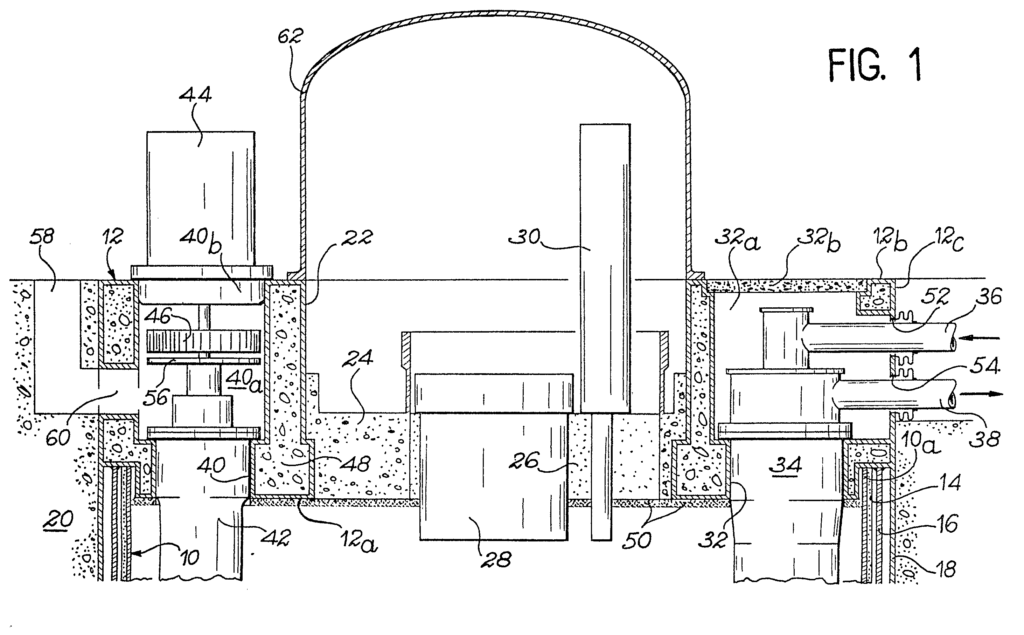

Conformément à la présente invention, l'épaisseur de la dalle 12 est augmentée par rapport à la technique antérieure ; elle peut devenir voisine de 6 m au lieu de 2,50 m dans les réacteurs connus du même type. Comme l'illustre la figure 1, cette caractéristique permet de disposer dans l'épaisseur de la dalle, au-dessus de chacun des puits 32 dans lesquels sont fixés les échangeurs 34, un logement 32a pour la tête de l'échangeur correspondant, et au-dessus de chacun des puits 40 dans lesquels sont fixées les pompes primaires 42, un logement 40a pour la tête de la pompe correspondante et de son volant d'inertie 46. La forme en plan de chacun des logements est conditionnée par la conception mécanique de la dalle rigide, avec les voiles métalliques reliant la face inférieure 12a à la face supérieure 12b, voiles par exemple purement radicaux et délimitant alors des logements accolés autour de l'orifice central réservé aux bouchons tournants. De tels voiles plans sont indiqués sur la figure 1 pour les logements 32a et 40a. Chaque logement 32a est obturé par un couvercle amovible 32b arasé à la face supérieure 12b de la dalle. Pour chacun des échangeurs 34, les tuyauteries 36 et 38 de sodium secondaire s'écartent radialement du réacteur en traversant la paroi métallique latérale 12c de la dalle par des orifices 52 et 54 munis de soufflets métalliques d'étanchéité entre cette paroi et les tuyauteries, pour assurer la fermeture vis-à-vis de l'extérieur du logement 32a, et pouvoir notamment le remplir de gaz inerte.

Chaque logement 40a comporte une partie supérieure de révolution dont la paroi est peu distante du volant 46 correspondant pour diminuer le choc en cas de rupture de celui-ci. Les logements 40a sont divisés en deux dans le sens de la hauteur par un plancher de fermeture 56 solidaire de la tête de pompe et disposé en dessous du volant 46, de façon à supporter le volant brisé pendant son ralentissement. De plus, chaque logement 40a est fermé à sa partie supérieure par un couvercle 40b solidaire du moteur 44 dans la variante représentée. Bien entendu, le moteur 44 peut être placé au-dessus du couvercle, comme on l'a représenté sur la figure 1, ou dans le logement 40a si les dimensions de ce logement le permettent. Le logement 40a est rendu visitable par un trou d'homme 58 et une galerie 60.

L'ouverture centrale 22 pour les bouchons tournants peut être munie d'un couvercle 62 amovible en forme de dôme, pour assurer un confinement supplémentaire si on l'estime utile.

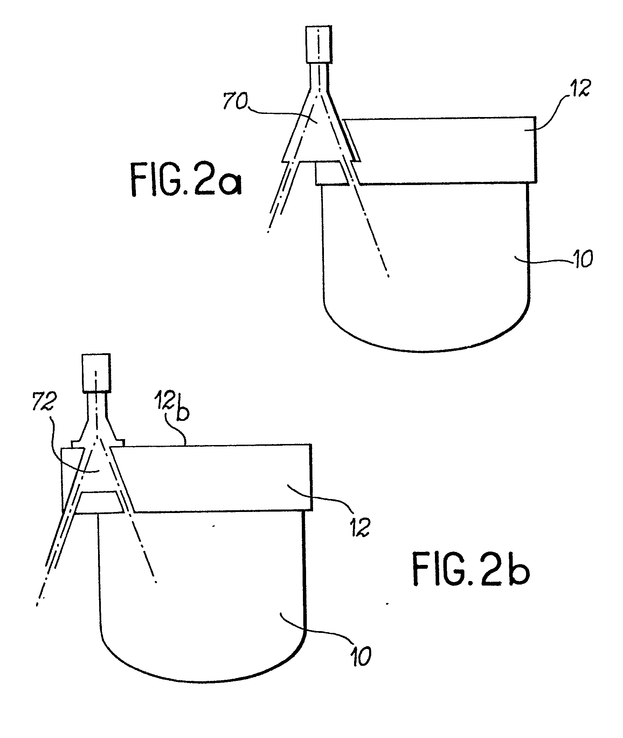

L'ensemble des autres pénétrations verticales existant dans les dalles relativement minces selon la technique antérieure peut être reproduit avec cette dalle épaisse moyennant des modifications qui apparaîtront aisées à l'homme de l'art. En particulier, dans un réacteur de type intégré en construction, il existe des rampes de transfert d'éléments combustibles aboutissant à un système basculeur placé au-dessus de la dalle. La figure 2a montre schématiquement un réacteur de cuve principale 10 surmonté par une dalle épaisse 12 selon l'invention, échancrée latéralement pour recevoir un système basculeur 70 identique à celui utilisé selon l'art antérieur. On pourra cependant préférer une disposition selon la figure 2b, comportant au contraire une dalle épaisse étendue latéralement pour définir un alvéole 72 de logement du dispositif basculeur. Bien entendu, la dalle épaisse peut être adaptée pour recevoir d'autres appareils de transfert d'éléments combustibles, et l'on pourra s'ingénier, pour diminuer les sujétions de blindage neutronique de tels appareils, à réduire leur hauteur et les effacer entièrement sous le plancher plat supérieur 12b de la dalle 12.

Les caractéristiques de la dalle du réacteur selon l'invention conduisent en particulier aux avantages suivants :

— La protection individuelle des têtes d'échangeurs, chacune dans un alvéole fermé par un couvercle, les soustrait aux chocs qui seraient provoqués par des erreurs de manutention d'objets lourds.

— Le confinement individuel des têtes d'échangeurs, chacune dans son alvéole, peut aisément être effectué en gaz neutre pour supprimer toute possibilité d'incendie, sans qu'on ait à ajouter de carénage spécial, et en autorisant une inspection continue par caméra de télévision.

— Les têtes de pompes et leurs volants sont également soustraits aux chocs incidentels, seuls restant exposés, le cas échéant, les moteurs de pompes.

— L'enfoncement des volants de pompes dans des alvéoles robustes procure la sécurité vis-à-vis de leur rupture éventuelle.

— Les hauteurs requises dans chaque grand composant pour assurer une protection neutronique convenable peuvent être diminuées puisque ce composant est entouré et surmonté de protections supplémentaires.

— L'épaisseur accrue de la dalle 12 permet, compte tenu des dimensions relativement réduites des logements pour les têtes des composants, de majorer sa résistance et sa raideur pour une masse donnée d'acier, et de réduire la flèche liée à l'échauffement de la sous-face.

— Cette épaisseur accrue facilite la réalisation et l'inspection de la partie métallique, ainsi que la mise en place du remplissage en béton.

— En découplant le problème de résistance de la dalle de celui de la réalisation des composants, on s'autorise mieux les évolutions de conception des projets.

**Revendications**

1. Réacteur nucléaire refroidi par un métal liquide, comprenant une cuve (10) remplie de métal liquide et obturée à sa partie supérieure par une dalle (12) présentant une ouverture centrale (22) dans laquelle est logé au moins un bouchon tournant (24, 26) surplombant le cœur du réacteur et des ouvertures périphériques (40, 32) disposées en couronne autour de l'ouverture centrale, par lesquelles sont suspendus au moins une pompe (42) et un échangeur de chaleur (34), caractérisé en ce que la dalle (12) est épaisse et comporte dans son épaisseur des voiles plans disposés radialement autour de l'ouverture centrale (22), au moins un premier logement (32a) délimité par les voiles plans surplombant l'une desdites ouvertures périphériques (32) par laquelle est suspendu un échangeur de chaleur (34), de façon à enfermer la tête de cet échangeur, ce premier logement étant obturé par un couvercle (32b) au-dessus de la tête de l'échangeur.

2. Réacteur selon la revendication 1, caractérisé en ce que le premier logement (32a) se prolonge radialement vers l'extérieur de la dalle (12) et débouche en vis-à-vis d'une paroi (12c) raccordée de façon étanche à la dalle, de telle sorte que ce premier logement assure le passage des tuyauteries (36, 38) d'un circuit de refroidissement secondaire de l'échangeur (34), ces tuyauteries traversant la paroi.

3. Réacteur selon l'une quelconque des revendications 1 et 2, caractérisé en ce que la dalle (12) comporte dans son épaisseur au moins un deuxième logement (40a) délimité par les voiles plans et surplombant l'une desdites ouvertures périphériques (40) par laquelle est suspendue une pompe (42), de façon à enfermer la tête de cette pompe, au moins une partie d'un arbre d'entraînement vertical reliant la pompe à un moteur (44), et un volant d'inertie (46) porté par cet arbre, ce deuxième logement étant obturé par un couvercle (44) au-dessus de la tête de pompe.

4. Réacteur selon la revendication 3, caractérisé en ce que le moteur est également enfermé dans le deuxième logement (40a).

5. Réacteur selon la revendication 3, caractérisé en ce que le moteur (44) est placé à l'extérieur du deuxième logement (40a), au-dessus du couvercle.

6. Réacteur selon l'une quelconque des revendications précédentes, caractérisé en ce que la dalle (12) comporte dans son épaisseur un troisième logement (72) pour la manutention des combustibles, ce troisième logement étant relié à l'intérieur de la cuve (10) et à une installation de manutention des combustibles par deux dispositifs de transfert.

7. Réacteur selon l'une quelconque des revendications précédentes, caractérisé en ce que le bouchon tournant (24, 26) est recouvert d'un couvercle amovible (62) fixé à la dalle (12).

8. Réacteur selon l'une quelconque des revendications précédentes, caractérisé en ce que la dalle (12) comporte une structure rigide formée de tôles d'acier pour constituer lesdits logements (32a, 40a, 72) et en ce que chaque logement est muni dans son plancher d'un garnissage en matériau absorbant neutronique.

9. Réacteur selon l'une quelconque des revendications précédentes, caractérisé en ce qu'au moins le premier logement (32a) est fermé de manière étanche et rempli de gaz inerte.

**Claims**

1. Liquid metal-cooled nuclear reactor, comprising a vessel (10) filled with liquid metal and closed at its upper end by a slab (12) having a central opening (22) in which is located at least one rotatable closure member (24, 26) above the reactor core, and peripheral openings (40, 32) disposed around the central opening, from which are suspended at least one pump (42) and one heat exchanger (34), characterized in that the slab (12) is thick and comprises within its thickness flat bulkheads radially disposed around the central opening (22), at least one first cavity (32a) bounded by the flat bulkheads, above that one of said peripheral openings (32) from which a heat exchanger (34) is suspended, whereby to seal the head of said exchanger, said first cavity being closed by a lid (32b) above the head of the exchanger.

2. Reactor according to Claim 1, characterized in that the first cavity (32a) extends radially towards the interior of the slab (32), ending facing a wall (12c) connected in fluid-tight fashion to the slab, whereby the first cavity provides passage for the tubing (36, 38) of a secondary cooling circuit of the exchanger (34), said tubing passing through the wall.

3. Reactor according to either of Claims 1 and 2, characterized in that the slab (12) has in its interior at least one second cavity (40a) bounded by flat bulkheads and over that one of said peripheral openings (40) from which a pump (42) is suspended, whereby to close the head of said pump, at least one part of a vertical drive shaft connecting the pump to a motor (44), and a flywheel (46) carried on said shaft, said second cavity being closed by a lid (44) above the head of the pump.

4. Reactor according to Claim 3, characterized in that the motor is also enclosed within the second cavity (40a).

5. Reactor according to Claim 3, characterized in that the motor (44) is located outside the second cavity (40a), above the lid.

6. Reactor according to any one of the preceding Claims, characterized in that the slab (12) has in its interior a third cavity (72) for fuel handling, said third cavity being connected to the interior of the vessel (10) and to a fuel-handling installation by two transfer devices.

7. Reactor according to any one of the preceding Claims, characterized in that the rotatable closure member (24, 26) is covered by a stationary lid (62) fixed to the slab (12).

8. Reactor according to any one of the preceding Claims, characterized in that the slab (12) has a rigid structure formed by steel sheets to provide said cavity (32a, 40a, 72) and in that each cavity has on its flooring a facing of neutron-absorbing material.

9. Reactor according to any one of the preceding Claims, characterized in that at least the first cavity (32a) is sealed in fluid-tight manner and filled with inert gas.

## Patentansprüche

1. Flüssigmetallgekühlter Kernreaktor mit einem Behälter (10), welcher mit Flüssigmetall gefüllt und an seinem oberen Abschnitt durch eine Deckelplatte (12) geschlossen ist, die eine mittlere Öffnung (22), in der wenigstens ein drehbarer Deckel (24, 26), der über den Reaktorkern hinausragt, angeordnet ist und Umfangsöffnungen (40, 32) aufweist, die auf einem Kranz um die mittlere Öffnung herum angeordnet sind und die wenigstens eine Pumpe (42) und einen Wärmetauscher (34) haltern, dadurch gekennzeichnet, daß die Deckelplatte (12) dick ist und über ihre Dicke ebene Stege umfaßt, die radial um die mittlere Öffnung (22) angeordnet sind, daß sich wenigstens ein erster von den ebenen Stegen begrenzter Raum (32a) über eine der Umfangsöffnungen (32), die einen Wärmetauscher (34) haltert, befindet derart, daß der Kopf dieses Wärmetauschers eingeschlossen ist, und daß der erste Raum oberhalb des Kopfes des Wärmetauschers mit einer Abdeckung (32b) verschlossen ist.

2. Reaktor nach Anspruch 1, dadurch gekennzeichnet, daß sich der erste Raum (32a) radial zum Äußeren der Deckelplatte (12) erstreckt und gegenüber einer Wand (12c) mündet, die dicht mit der Deckelplatte verbunden ist derart, daß dieser erste Raum den Durchgang von Rohrleitungen (36, 38) eines Sekundärkühlkreises des Wärmetauschers (34) sicherstellt, wobei diese Rohrleitungen die Wand durchqueren.

3. Reaktor nach Anspruch 1 oder 2, dadurch gekennzeichnet, daß die Deckelplatte (12) über ihre Dicke wenigstens einen zweiten Raum (40a) aufweist, der von den ebenen Stegen begrenzt ist und sich über einer der Umfangsöffnungen (40), die eine Pumpe (42) haltert, derart befindet, daß der Kopf dieser Pumpe, wenigstens ein Teil einer die Pumpe mit einem Motor (44) verbindenden, vertikalen Antriebswelle und ein von dieser Welle getragenes Schwungrad (46) eingeschlossen wird, wobei dieser zweite Raum mit einer Abdeckung (44) oberhalb des Kopfes der Pumpe verschlossen ist.

4. Reaktor nach Anspruch 3, dadurch gekennzeichnet, daß der Motor ebenfalls in dem zweiten Raum (40a) eingeschlossen ist.

5. Reaktor nach Anspruch 3, dadurch gekennzeichnet, daß der Motor (44) außerhalb des zweiten Raumes (40a) oberhalb der Abdeckung angeordnet ist.

6. Reaktor nach einem der vorhergehenden Ansprüche, dadurch gekennzeichnet, daß die Deckelplatte (12) über ihre Dicke einen dritten Raum (72) zur Handhabung von Brennelementen aufweist und daß dieser dritte Raum über zwei Überführungsvorrichtungen mit dem Inneren des Behälters (10) und einer Handhabungseinrichtung für die Brennelemente verbunden ist.

7. Reaktor nach einem der vorhergehenden Ansprüche, dadurch gekennzeichnet, daß der drehbare Deckel (24, 26) mit einer entfernbaren Überdeckung (62) überdeckt ist, die an der Deckelplatte (12) angebracht ist.

8. Reaktor nach einem der vorhergehenden Ansprüche, dadurch gekennzeichnet, daß die Deckelplatte (12) eine steife Struktur aufweist, die aus Stahlblechen gebildet ist, um die Räume (32a, 40a, 72) zu bilden, und daß jeder Raum in seinem Boden mit einer Füllung aus Neutronen absorbierendem Material versehen ist.

9. Reaktor nach einem der vorhergehenden Ansprüche, dadurch gekennzeichnet, daß wenigstens der erste Raum (32a) abdichtend geschlossen und mit einem Inertgas gefüllt ist.

# FIG. 1

FIG.2a

FIG.2b